# EUROPEAN PATENT APPLICATION

(11) **EP 3 223 220 A1**
(43) Date of publication of application: **27.09.2017**
(21) Application number: 15861451.1
(22) Date of filing: 20.11.2015
(51) Int. Cl.: G06Q 20/34, G06Q 20/40

(54) **SMART MULTI CARD, AND METHOD FOR ISSUING CARD DATA FOR SMART MULTI CARD**

(30) Priority: 20.11.2014 KR 20140162789; 20.11.2014 KR 20140162793
(71) Applicant: Brilliantts Co. Ltd., Seongnam-si, Gyeonggi-do 13494 (KR)
(72) Inventor: BAE, Jae Hun, Seongnam-si Gyeonggi-do 13456 (KR)
(74) Representative: Zardi, Marco
(86) International application number: PCT/KR2015/012564
(87) International publication number: WO 2016/080811

(57) **Abstract**

The present invention relates to a smart multi card, and a method for issuing card data for a smart multi card. A smart multi card according to an embodiment of the present invention comprises: a first storage unit for storing one or more pieces of first encryption data and seed data, wherein the first encryption data generated by performing a first encryption of specific card information or alternative information corresponding to the card information; a second storage unit for storing card related data including storage location data of the specific first encryption data and seed data in the first storage unit; a user input unit for receiving a user's operation in order to make a selection from one or more cards; a first control unit for generating token data by performing a second encryption of the first encryption data corresponding to the selected card using the seed data; a second control unit for making a request to the first control unit for the token data on the basis of the storage location data that corresponds to the selected card; and a card data output unit for externally outputting the token data.

## Description

### Field of the invention

The present invention relates to a smart multi card and a method for issuing card data for a smart multi card, and more particularly, to a smart multi card which outputs selected specific card data using a desired output method and a method for issuing and providing card data to a smart multi card.

### Related Art

As modern society has rapidly become information-based and credit-based after industrialization, the use of credit cards has increased to be as much as that of cash. Accordingly, the number of credit cards carried by a regular adult has also significantly increased, and thus each person uses at least two or three cards, and in some cases, ten or more cards are held and used. Also, in accordance with marketing activation, issuance of various point cards has become an essential marketing item in most business to consumer (B2C)-based corporations and has generally been utilized to increase sales at small stores located in commercial areas.

Thus, tens of cards are actually being unintentionally issued. However, most of such cards are discarded after generation, which just leads to unnecessary issuing costs and social costs. Further, in some cases, point cards or discount cards of stores that are not frequently visited cannot be utilized when such cards are not held during actual visits. This causes avoidance of card issuance due to inconvenient and complex card management from a consumer standpoint and causes generation of unnecessary marketing costs from a corporate standpoint. That is, this causes waste and irrationality in terms of both supply and demand. For credit cards, which are actually determined to have higher utilization than point cards, the number of credit cards held by each person increased to 4 in 2001, stopped increasing for a while after credit card liquidity crisis, and then continued to increase to 4.9 in 2011. The total number of credit cards that have been issued has reached about 122,130,000 in 2011.

While the number of cards issued has continuously increased, the number of cards that are actually used by each person is just 1.4. As a result, most credit cards held by each person are dormant, and about 20,000,000 or more cards (corresponding to about 40,000,000,000 won or more) are actually being discarded. When various cash replacement cards such as debit cards, check cards, cash cards, and prepaid cards or marketing cards such as point cards or discount cards are included in the above figure, it is feasible to say that astronomical costs are being wasted.

Therefore, it is necessary to develop a card that enables integrated use of various cards, such as a debit card, a check card, a credit card, a membership card, and the like.

### SUMMARY OF THE INVENTION

The present invention is directed to providing a smart multi card that outputs card data through an output means desired by a user among various card data output means included therein.

The present invention is also directed to providing a smart multi card that performs tokenization to prevent actual card data from being intercepted by other people when the card data is output through a card data output means.

The present invention is also directed to providing a method for issuing card data for a smart multi card which provides card data encrypted to prevent leakage of actual card data to a smart multi card when a card is issued through wireless communication, and provides data required for tokenization (i.e., seed data) to the smart multi card to improve security when a payment is made.

A smart multi-card according to an embodiment of the present invention includes a first storage unit configured to store seed data and at least one piece of first encryption data generated by first-encrypting specific card information or alternative information corresponding to the card information, a second storage unit configured to store card-related data including data regarding storage locations of a specific piece of the first encryption data and the seed data in the first storage, a user input unit configured to receive a manipulation of a user for a selection among one or more cards, a first control unit configured to generate token data by second-encrypting a piece of the first encryption data corresponding to the selected card with the seed data, a second control unit configured to request that the first control unit provide the token data based on a piece of storage location data corresponding to the selected card and a card data output unit configured to output the token data to an outside, wherein the card data output unit includes an integrated circuit (IC) chip and the first control unit and the first storage unit are included in the IC chip.

Also, the smart multi card further includes a wireless communication unit configured to receive a piece of the first encryption data corresponding to a specific card and the seed data by exchanging data with a mobile terminal by wireless communication and the second control unit requests that the first storage unit store the piece of the first encryption data and the seed data received through the wireless communication unit at a specific storage location in the first storage unit.

Also, the mobile terminal receives the piece of the first encryption data and the seed data from a card information management server by wireless communication and transfers the piece of the first encryption data and the seed data to the smart multi card.

Also, the wireless communication unit transmits first user authentication information, which is compared with second user authentication information stored in the mobile terminal, to the mobile terminal and receives the piece of the first encryption data and the seed data from the mobile terminal when the first user authentication information coincides with the second user authentication information.

Also, the card-related data includes card identification information, the smart multi card further includes a display unit configured to visually display a piece of card identification data of the selected card on a screen.

Also, the seed data varies according to users or financial companies, and the token data is transferred from a payment terminal to a financial company server, is subjected to second decryption based on the seed data, and is then subjected to first decryption corresponding to the first encryption so that whether to approve a payment is determined.

Also, the second control unit combines the token data with time data corresponding to a time point at which the token data is received from the first control unit and the time data is used to determine whether a time point at which a financial company server determines whether to approve a payment is within a specific time range from the time point corresponding to the time data.

Also, the time data is generated according to a specific random number generation rule in the second control unit.

Also, the card data output unit further includes a magnetic field generation unit configured to include at least one magnetic cell and output the token data by generating a magnetic field and the user input unit receives a selection of an output method for the token data from the user.

A method in which a card information management server issues card data to be stored in a smart multi card according to an embodiment of the present invention includes receiving card information of a real card owned by a user from a mobile terminal, requesting that a financial company server generate alternative information matched with the card information and receiving first encryption data generated by first-encrypting the alternative information and seed data and transmitting the first encryption data and the seed data directly to the smart multi card or transmitting the first encryption data and the seed data to the smart multi card through the mobile terminal.

A method in which a card information management server issues card data to be stored in a smart multi card according to an embodiment of the present invention includes receiving a request that a specific card be newly issued from a mobile terminal, requesting that a financial company server provide information on the card requested to be newly issued and receiving first encryption data generated by first-encrypting the card information and seed data and transmitting the first encryption data and the seed data directly to the smart multi card or transmitting the first encryption data and the seed data to the smart multi card through the mobile terminal.

According to the above-described present invention, it is possible to obtain the following effects.

First, a user can conveniently input a new card into a smart multi card.

Second, card information is encrypted and stored in an IC chip, and thus leakage thereof to the outside can be prevented.

Third, since first-encrypted card data (i.e., first encryption data) is transmitted and received by wireless communication, it is possible to prevent leakage of actual card data after the first-encrypted card data is intercepted.

Fourth, since token data generated through encryption is used for a payment, it is possible to prevent actual card data from being leaked when a payment is made.

Fifth, when a financial company server determines whether to approve a payment using time data, a transaction which takes longer than a specific time range is determined to be an abnormal transaction and may not be approved. In this way, a maximum time range for payment approval is adopted, and security can be further improved.

### BRIEF DESCRIPTION OF THE DRAWINGS

FIG. 1 is a diagram illustrating internal constitution of smart multi card according to one embodiment of the present invention.
FIG. 2 is an exemplary diagram of smart multi card including IC chip connector unit.
FIG. 3 is an exemplary diagram of smart multi card including IC chip connector unit and magnetic field generation unit.
FIG. 4 is a flowchart of a method for issuing card data for a smart multi card according to an embodiment of the present invention when there is a real card.
FIG. 5 is a flowchart of a method for issuing card data for a smart multi card according to an embodiment of the present invention when a new card is issued by the financial company server.
FIG. 6 is a connection relation diagram of smart multi card, mobile terminal, card information management server and financial server.

### DESCRIPTION OF EXEMPLARY EMBODIMENTS

Preferred embodiments of the present invention will be described below in detail with reference to the accompanying drawings. Advantages and features of the present invention and methods of accomplishing the same should become apparent with reference to embodiments described below in detail in connection with the accompanying drawings. However, the present invention is not limited to the embodiments disclosed below and may be implemented in various different forms. Exemplary embodiments are provided only for completing the disclosure of the present invention and fully representing the scope of the present invention to those skilled in the art. Rather, the scope of the present invention is defined only by the claims. Like reference numerals refer to like elements throughout.

Unless otherwise defined, all terms (including technical and scientific terms) used herein have the same meaning as commonly understood by one of ordinary skill in the art to which this invention belongs. It should be further understood that terms, such as those defined in commonly-used dictionaries, should be interpreted as having meanings that are consistent with their meanings in the context of the relevant art and are not to be interpreted in an idealized or overly formal sense unless expressly so defined herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. The terms "comprises" and/or "comprising" used herein specify the presence of stated elements, but do not preclude the presence or addition of one or more other elements.

In the present specification, a mobile terminal 200 refers to a terminal that can be used by a user who is moving. In other words, the mobile terminal 200 may include any terminal, such as a cellular phone, a personal communication service (PCS) phone, a synchronous/asynchronous international mobile telecommunication-2000 (IMT-2000) mobile terminal, a palm personal computer (PC), a personal digital assistant (PDA), a smart phone, a wireless application protocol (WAP) phone, a mobile game machine, a tablet PC, etc., that can be used by a moving user. The mobile terminal 200 may also be referred to as a mobile device.

In the present specification, card data denotes data that is provided to a payment terminal (or a card reader) for a payment or point accumulation. In other words, in the case of a general magnetic card, since an actual card number, etc. is provided to a card reader as it is, the actual card number, etc. may correspond to the card data. Also, when encrypted data is output to a payment terminal, the card data may correspond to the encrypted data. The card data may be referred to as card information below.

In the present specification, first encryption data is data that is generated by first-encrypting specific card information or alternative information corresponding to the card information. In other words, the first encryption data denotes data that is generated by a financial company server applying specific encryption rules (i.e., performing first encryption) to actual card information (i.e., the card data).

In the present specification, seed data is data regarding rules or an algorithm that is used for encryption or tokenization in a card (e.g., an integrated circuit (IC) chip in the card).

In the present specification, token data denotes data that is obtained by encrypting the card data (e.g., actual card data or the first encryption data) using seed data in a smart multi card.

In the present specification, card-related data denotes data that is related to a card excluding the card data used for a payment or point accumulation. In other words, the card-related data may include card identification information, card benefit information, etc., and may also include storage location data of the card data.

Hereinafter, a smart multi card according to embodiments of the present invention will be described.

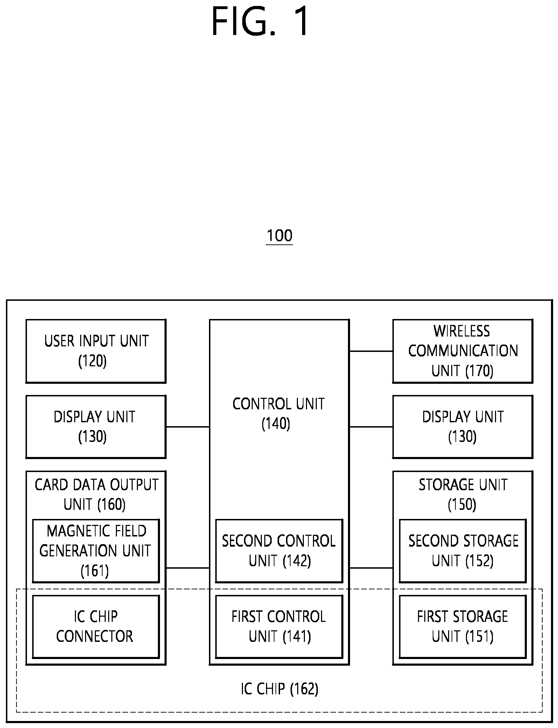

FIG. 1 is
Referring to FIG. 1, a smart multi card 100 according to an embodiment of the present invention includes all or some of a plate 110, a display unit 130, a user input unit 130, a control unit 140, a storage unit 150, a card data output unit 160, a wireless communication unit 170, an unlocking unit, and an insertion sensing unit. The components will be sequentially described below.

The smart multi card 100 corresponds to a card (i.e., a device) that, unlike a conventional card in which only one piece of card information is included in an IC chip, can include one or more pieces of card information. In other words, the smart multi card 100 is a card in which one of the stored one or more pieces of card information can be loaded to make a payment or accumulate points.

The plate 110 is formed in a rectangular plate shape, and corners of the rectangular plate shape may be rounded. The plate 110 may include components of the smart multi card 100, such as the card data output unit 160, the control unit 140, and the like. The plate 110 may be made of an elastic plastic or metal plate like a general card, or may be configured by overlapping several layers. Also, the plate 110 may be manufactured by molding a substrate in which the components of the smart multi card 100 are disposed with a specific material.

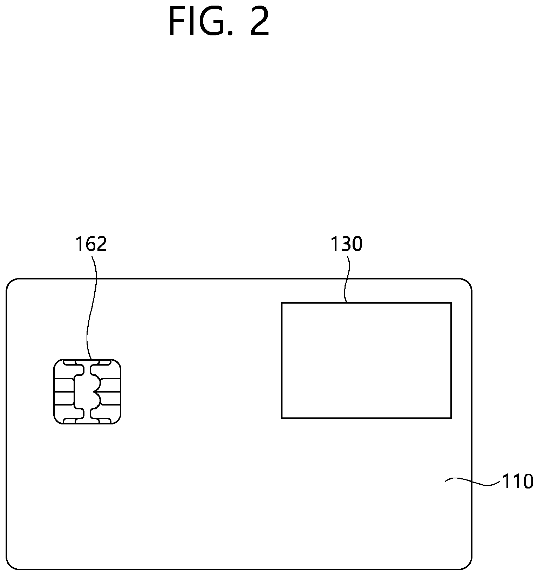

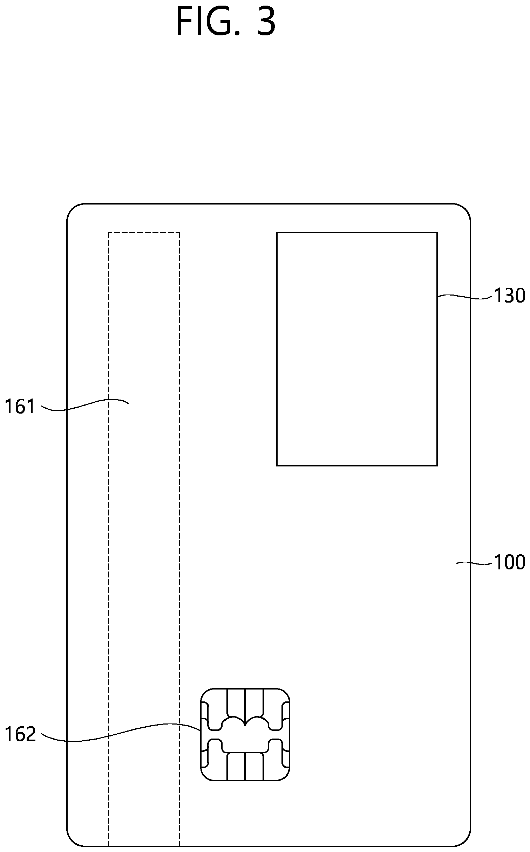

As shown in FIGS. 2 and 3, the card data output unit 160 to be described below may be disposed in the plate 110. For example, when the card data output unit 160 is an IC chip 162, the card data output unit 160 may be disposed on one side of a front surface of the plate 110 to be exposed to the outside. Also, for example, when the card data output unit 160 includes a magnetic field generation unit 161 which generates a magnetic signal, the card data output unit 160 may be disposed on one side of a rear surface of the plate 110, more specifically, one side of the rear surface adjacent to one of two long sides of the plate 110 formed in the rectangular shape, to be exposed to the outside. Further, for example, when the wireless communication unit to be described below performs functions of the card data output unit 160 (e.g., when the card data is transmitted through a near field communication (NFC) module or a Bluetooth communication module of the wireless communication unit), the wireless communication unit may be embedded in the plate 110 and may send a wireless communication signal corresponding to card information to the outside.

In the plate 110, the insertion sensing unit to be described below may be provided in a direction continuous to one end of the magnetic field generation unit 161 (e.g., a direction in which the plate 110 is inserted into a card reader) to be exposed to the outside. Also, the display unit 130 and the user input unit 120 to be described below may be provided on one side of the front surface of the plate 110 and exposed to the outside.

Parts of the components exposed to the outside, such as the card data output unit 160, the insertion sensing unit, the display unit 130, the user input unit 120, etc., may be embedded in the plate 110, and the control unit 140, electrical wiring (not shown), a memory (not shown), a power supply unit (not shown), etc., which are components not exposed to the outside, may be embedded in the plate 110. When the plate 110 is configured with several layers, several sheets of electrical wiring may be between the layers of the plate 110, and the layers of the plate 110 may be connected through a via which corresponds to a wiring passage.

The user input unit 120 performs a function of receiving input data for controlling operation of the smart multi card 100 from a user. The user input unit 120 may be configured as a key pad, a dome switch, a touchpad (pressure-sensitive/capacitive), a jog wheel, a jog switch, or the like. In particular, when the touchpad constitutes a layered structure together with the display unit 130 to be described below, the touchpad and the display unit 130 may be referred to as a touch screen.

The display unit 130 is provided on one side of the plate 110 and performs a function of visually displaying card-related data on a screen and providing the card-related data to a user. In other words, the display unit 130 performs a function of displaying an image or image data that is generated and provided by the control unit 140. The card-related data may include card identification information, such as a card image, a card name, a card company, etc., and benefit information, such as discount information, interest-free installment information, etc., of the card.

The display unit 130 may include at least one of a liquid crystal display (LCD), a thin film transistor-LCD (TFT LCD), an organic light-emitting diode, a flexible display, and electronic (E)-paper. There may be two or more display units 130 according to an implemented form of the multi card. For example, the display unit 130 may be provided on each of the front surface and the rear surface of the multi card.

E-paper is an electronic device that provides the feeling of paper and serves as paper, and is also referred to as e-paper. E-paper may employ various methods, such as a method of bringing about an ink effect using small balls or capsules, a method of bringing about a paper effect by making a flat panel display including a conventional LCD or the like thinner, and the like.

The display unit 130 may be disposed on one side of the front surface of the plate 110. In particular, the display unit 130 may be disposed in a region that does not overlap the IC chip 162 disposed on one side of the front surface of the plate 110 and the magnetic field generation unit 161 disposed on one side of the rear surface of the plate 110. In this way, it is possible to prevent damage of the display unit 130 when the magnetic field generation unit 161 is swiped through a magnetic card reader or the multi card is inserted into an IC card reader. Also, the display unit 130 may be disposed at a position adjacent to the user input unit (e.g., a touch unit or a touchpad) on the plate 110 so that a user may easily perform a touch manipulation while looking at the display unit 130.

When the display unit 130 constitutes the layered structure together with the touch sensor (referred to as a "touch screen" below), the display unit 130 may be used as an input device as well as an output device. The touch screen may display a user interface (UI) screen of the card and receive an input manipulation for a position corresponding to the screen from a user. The touch screen may receive various input manipulations, such as a contact manipulation, a slide manipulation, a swipe manipulation, a knock manipulation, etc., from a user.

The card data output unit 160 performs a function of transmitting card information for making a payment or accumulating points. The card data output unit 160 may correspond to various components that can transmit the card information to an external card reader. For example, the card data output unit 160 may include the magnetic field generation unit 161, the IC chip 162, and the like. Also, some modules (e.g., an NFC module, a Bluetooth low energy (BLE) communication module, etc.) of the wireless communication unit 170 to be described below may perform functions of the card data output unit 160 when the card data is transmitted to a payment terminal.

The magnetic field generation unit 161 includes a magnetic cell that generates a magnetic field by a current flow and outputs a magnetic signal of the card information. The magnetic field generation unit 161 may include at least one track. Each track may include a magnetic cell and generate a magnetic signal to be provided to a header of a card reader. The magnetic cell may be configured in various forms. For example, a single magnetic cell or a plurality of magnetic cells may be disposed on a track. Also, magnetic cells may be disposed in various directions. For example, the magnetic cells may be disposed to be erected so that only a specific polarity is exposed to one surface (i.e., in a magnetic signal output direction) of the plate 110 when a magnetic field is generated. In other words, the magnetic cells may be disposed on a specific surface of the plate 110 so that only a specific polarity according to a current direction is exposed in the magnetic signal output direction. Also, for example, the magnetic cells may be disposed so that both of the polarities are exposed in the magnetic signal output direction.

The IC chip 162 may exchange data with a contact card reader. In other words, a connector unit, which is a part of the IC chip 162 capable of coming into physical contact with an external card reader, is exposed to the outside of the plate 110. Therefore, when the smart multi card 100 is inserted into a contact card reader, the IC chip 162 can come into contact with a card contact unit of the contact card reader and directly exchange data therewith.

The card data output unit 160 may output card data generated by the control unit. In an embodiment, when the control unit (a second control unit when the control unit is divided into a first control unit and the second control unit to perform functions) generates token data by second-encrypting card information (particularly, the first encryption data) with seed data as described below, the card data output unit 160 may output the token data according to a request of the control unit (the first control unit when the control unit is divided into the first control unit and the second control unit to perform functions). For example, when the card data output unit 160 includes a magnetic field generation unit, the magnetic field generation unit 161 may change a direction of a magnetic field generated by one or more magnetic cells according to time and output the token data.

The card data output unit 160 may improve security by outputting data which has been second-encrypted or tokenized with the seed data. In other words, when a payment is made using a conventional magnetic card, a magnetic band is manufactured using card information as it is, and thus there is a risk that a card number, etc. will be easily exposed to other people. However, since the smart multi card 100 outputs the token data through the magnetic field generation unit 161, other people cannot know card information (i.e., a card number, a valid date, a card validation code (CVC), etc.) even when a change in a magnetic field is sensed.

The control unit 140 is provided in the plate 110 and performs an overall control function required to use the multi card. The control unit 140 performs a function of transferring card information to the specific card data output unit 160. For example, when the card data output unit 160 includes the magnetic field generation unit 161, the control unit 140 may perform a function of transferring the card data, which corresponds to a card selected according to a user's manipulation of the user input unit, to the magnetic field generation unit 161 and causing the magnetic field generation unit 161 to generate a specific magnetically-driven current signal. The control unit 140 may cause the magnetic field generation unit 161 to generate magnetic signals in a time-series manner by controlling whether to supply the magnetically-driven current signal or a direction in which the magnetically-driven current signal flows. In other words, a magnetic cell may adjust a direction of a magnetic field that is exerted on a header of a card reader by adjusting a current. Also, when a plurality of magnetic cells are included in a specific track, the control unit 140 may control all current directions together so that the magnetic cells generate the same polarity in the magnetic signal output direction (a card reader header direction). When the magnetic field generation unit 161 includes a plurality of tracks, the control unit 140 may cause changes in magnetic fields in headers of a card reader corresponding to each track by adjusting magnetically-driven current signals which are separately input to the tracks.

Also, for example, the control unit 140 may perform a function of generating information or a screen to be displayed on the display unit 130. In other words, the control unit 140 may generate and provide a card UI screen to the display unit 130. When a user can select or set a desired UI screen configuration, the control unit 140 may generate a UI screen corresponding to the user's setting and provide the UI screen to the display unit 130.

Further, for example, the control unit 140 may perform a function of receiving an input manipulation from the user input unit 120, determining a corresponding operation, and instructing to perform the operation. Specifically, when the user input unit 120 is a touch screen combined with the display unit 130, the control unit 140 determines a position, a kind, or a type of an input manipulation received by the touch screen and determines a control command corresponding to the determination. When an input manipulation is made on the touch screen, the control unit 140 may output the card data of card information corresponding to the input manipulation to the specific card data output unit 160 and generate and transfer a screen which displays the card information corresponding to the input manipulation to the touch screen.

In an embodiment, the control unit 140 may include a first control unit 141 and a second control unit 142. In other words, the first control unit 141 and the second control unit 142 may perform functions of the control unit 140 in a distributed manner. The first control unit 141 may perform a function of generating the card data, which will be generated or output to the outside to make a payment, or storing the card data at a specific location in a first storage unit. The second control unit 142 may perform overall operations for card control except for operations performed by the first control unit 141.

The first control unit may be provided in the IC chip. In other words, the IC chip may have a card operating system (COS) therein, and may serve as the first control unit. Functions performed by the first control unit 141 will be described in detail below.

The first control unit 141 performs a function of storing the card data at a specific storage location (e.g., a stack which is a specific storage location of the first storage unit to be described below). The specific storage location may be designated by the second control unit 142, and the first control unit 141 may store the card data at the location. For example, when the card data is the first encryption data and the seed data, the first control unit 141 may store the first encryption data and the seed data together at the specific storage location in the first storage unit designated by the second control unit 142. In this way, the first control unit stores the card data at the location designated by the second control unit so that the second control unit can load the card data as necessary without checking the card data.

Specifically, the first control unit 141 may store the card data (e.g., encryption data and the seed data) regarding a new card (e.g., a card requested to be newly issued, a card that is possessed as a real card by a user and the user desires to input to the smart multi card, and the like) in a specific storage space (e.g., in a first storage unit which is an electrically erasable programmable read-only memory (EEPROM) provided in the IC chip).

Also, the first control unit 141 may perform a function of generating token data from the card data. In other words, the first control unit 141 may generate token data that can be output to the outside by second-encrypting the first encryption data stored therein with the seed data.

In this way, the token data is generated on the basis of the seed data, which is an algorithm for encryption, and output. Therefore, when a payment is made with a card, card information is not directly exposed to the outside, and security can be improved. In other words, since the seed data varies according to users or financial companies, outsiders cannot extract card information (e.g., a card number, a CVC number, valid date information, etc.) from the token data. Also, since the token data is transferred from a payment terminal to a financial company server 400 and decrypted on the basis of the same seed data stored therein, security can be enhanced.

In particular, when the token data is generated using the first encryption data, the financial company server 400 should perform first decryption corresponding to first encryption and second decryption corresponding to tokenization (i.e., second encryption) to check card information, and thus security is greatly enhanced. The financial company server 400 may determine whether to approve a payment on the basis of the card information acquired through the first decryption and the second decryption.

The second control unit may perform overall functions of the card except for the card data generation or storage function performed by the first control unit.

To output the card data to a card reader, the second control unit may identify a storage location at which specific card data (e.g., the first encryption data and the seed data) is stored and request that the first control unit 141 provide the card data on the basis of the identified storage location. Specifically, the second control unit 142 may receive a selection of a specific card by sensing a selection manipulation input from the user input unit and request that the first control unit 141 load card data corresponding to the selected card.

Also, the second control unit 142 may request that the first control unit store the first encryption data and the seed data received through the wireless communication unit 170 at a specific storage location in the first storage.

Further, the second control unit 142 may transfer card data provided by the first control unit to a selected specific card data output unit (e.g., a contact unit of the IC chip or the magnetic field generation unit). In other words, the smart multi card 100 may receive a selection of a specific output method (i.e., at least one of one or more types of card data output units) as well as a selection of a card to be used through the user input unit 130 and transfer the card data (e.g., the token data) to the selected card data output unit 160.

Moreover, the second control unit 142 may serve to combine the token data with time data corresponding to a time point at which the token data is received from the first control unit 141. The time data may be used to determine whether a time point at which the financial company server 400 determines whether to approve a payment is within a specific time range from the time point corresponding to the time data. In other words, when the financial company server 400 completes decryption the specific time or more after the token data for the payment is received from the first control unit, the payment is determined to be an abnormal payment and may not be approved. In this way, it is possible to prevent a significant increase in a time interval between a time point at which token data for a payment with the smart multi card is generated and the time point at which the financial company server 400 determines whether to approve the payment. Therefore, an abnormal payment is prevented, and security can be enhanced.

The time data may be generated according to a specific random number generation rule in the second control unit. Since the financial company server 400 or a card information management server 300 includes the same random number generation rule as the second control unit, the financial company server 400 or the card information management server 300 can identify a time corresponding to a specific random number. In this way, it is possible to prevent leakage of time data for improving security to the outside.

The storage unit 150 stores a plurality of pieces of card information and the card data. Also, when the plurality of pieces of card information are stored, the storage unit 150 may classify cards and store the classified cards so that a user can select a card rapidly and conveniently. For example, the smart multi card 100 may classify cards into a credit card, a check card, a point card, a membership card, etc. according to card types and store the classified cards, or may classify the cards according to frequencies of use, card issuers, etc. of the cards and store the classified cards. Also, the storage unit 150 may store a program for operation of the control unit 140.

In an embodiment, the storage unit 150 may include a first storage unit 151 and a second storage unit 152. The first storage unit may perform a function of storing the card data. In other words, the first storage unit may perform a function of storing card information (i.e., information in which a card number, a valid date, a CVC, etc. are combined) encrypted and provided from the outside and seed data required for tokenization (i.e., second encryption). The first storage unit may correspond to an EEPROM in the IC chip. Specifically, the EEPROM in the IC chip may include a system area for storing information required to manage the card and unique information thereof, an application file area which is accessible through the COS corresponding to the first control unit, and the like. The card data may be stored in the application file area in the EEPROM and can be accessed by the first control unit when necessary.

The second storage unit 152 may perform a function of storing data required for overall card use. In other words, the second storage unit may store card-related data. For example, the second storage unit may store card-specific benefit data and card identification information (e.g., card images, card names, etc.). Also, the second storage unit may store card data-specific storage location data for the second control unit to request the card data.

Specifically, when the card data includes the first encryption data and the seed data, the first storage unit may store at least one piece of the first encryption data and the seed data, and the second storage unit may store card-related data including data regarding storage locations of a specific piece of the first encryption data and the seed data in the first storage unit.

The wireless communication unit 170 is provided in the plate 110 and performs a function of sending card information to the outside by wireless communication. In other words, the wireless communication unit 170 may perform a function of transmitting the card data to a payment terminal (i.e., a card reader).

Also, the wireless communication unit 170 may receive card data (e.g., the first encryption data and the seed data used to generate the token data) corresponding to a specific card by exchanging data with a mobile terminal 200. In other words, the smart multi card 100 may receive the card data (e.g., a combination of the first encryption data and the seed data) from the card information management server 300 through the mobile terminal 200 (e.g., the mobile terminal 200 receives the card data from the card information management server 300 by wireless fidelity (Wi-Fi) communication, long term evolution (LTE) cellular communication, or the like and transmits the card data to the smart multi card through short-range wireless communication).

Further, the wireless communication unit 170 may perform a function of receiving user authentication information from the mobile terminal 200. In other words, the wireless communication unit 170 may receive information to perform user authentication when new card information is subsequently received from the mobile terminal 200 (i.e., first user authentication information). The user authentication information may correspond to biometric information of a user, such as fingerprint information or the like, and may correspond to various kinds of information for determining a user.

Moreover, the wireless communication unit 170 may transmit the first user authentication information, which is compared with second user authentication information stored in the mobile terminal 200, to the mobile terminal 200, and may receive the first encryption data and the seed data from the mobile terminal 200 when the first user authentication information coincides with the second user authentication information. In other words, the smart multi card 100 may check whether pieces of user authentication information correspond to the same user device by comparing the pieces of user authentication information when new card information is received from the mobile terminal, and may receive new card data according to an approval of the mobile terminal 200 when the pieces of user authentication information correspond to the same user device.

Short-range communication technology used for the wireless communication unit may be Bluetooth, BLE, beacon, radio frequency identification (RFID), infrared data association (IrDA), ultra wideband (UWB), ZigBee, NFC, and the like. The wireless communication unit may receive and transfer new card information to the control unit 140, and the control unit 140 may perform information processing and store the new card information in the memory.

The insertion sensing unit may recognize an insertion of the card into a card reader. In an embodiment, the insertion sensing unit may have a pressure sensor to sense whether the card is inserted into an IC card reader. For example, the pressure sensor may be attached to one side (e.g., a short side adjacent to the IC chip) of the smart multi card. When the smart multi card is inserted into an IC card reader and the side in which the pressure sensor is provided comes into contact with one side in the card reader, it is possible to determine that the card has been inserted into the card reader.

In another embodiment, the insertion sensing unit may be disposed at a specific position on the plate 110 which a header of the card reader passes. For example, the pressure sensor may be disposed on or below the magnetic field generation unit 161, and when the card is inserted into the card reader, the pressure sensor may be pressurized by the header. In other words, when the card is inserted between the header and one side of the card reader and pressurized by the header while the header is in contact with the one side of the card reader, the card may recognize the insertion into the card reader and supply power to a magnetic cell.

Also, for example, when card swiping is dynamically performed, the insertion sensing unit is provided at a position adjacent to an end of the magnetic field generation unit 161, and when the card moves in the card reader, the magnetic field generation unit 161 can sense the contact of the header before being recognized by the header. In this way, when card reading starts, the multi card starts to generate a magnetic signal so that power consumption can be reduced.

Further, the insertion sensing unit may sense the insertion into the card reader by receiving an electrical signal resulting from an exchange of a magnetic signal of the card information with the header of the card reader from the magnetic field generation unit 161. In other words, the magnetic cell of the magnetic field generation unit 161 serves as an inductive sensor and may sense a change in a magnetic field between the header of the card reader and the magnetic field generation unit 161 and send card information.

In another embodiment, the insertion sensing unit may utilize the pressure sensor and the inductive sensor together. In this way, it is possible to prevent the case in which a malfunction is caused when the pressure sensor is pressurized by a component other than the header of the card reader or the case in which a malfunction is caused when a change in a magnetic field made by an object, which results in a change in the magnetic field, other than the header of the card reader is sensed by a magnetic cell.

The unlocking unit is provided on one surface of the plate 110 and performs a function of receiving an unlocking manipulation for activating a touch manipulation function of the touch unit. In other words, when a user tries to manipulate the multi card, the user may activate the touch manipulation function by manipulating the unlocking unit before or at the same time as a manipulation of the touch unit. For example, the touch unit may activate the touch manipulation function only while the unlocking manipulation for the unlocking unit is input by the user. Accordingly, it is possible to prevent an unintended touch manipulation from being input through the touch unit.

The unlocking unit may be provided as a button or a touch sensor (e.g., a body contact sensor). In other words, it is possible to activate the touch manipulation function when a user presses the button with a specific finger or touches the touch sensor with a finger to input a touch manipulation.

Also, the unlocking unit includes a fingerprint recognition module which receives fingerprint information of a user and may activate the touch manipulation function when the received fingerprint information coincides with previously stored fingerprint information. In other words, when a finger of a user touches the fingerprint recognition module, the fingerprint recognition module may receive fingerprint information, determine whether the fingerprint information coincides with fingerprint information of a user stored in the multi card, and determine whether to activate the touch manipulation function or all functions of the multi card. In this way, it is possible to prevent people other than a card owner from manipulating the card or making a payment.

A method in which the card information management server 300 issues card data for a smart multi card will be described below according to embodiments of the present invention.

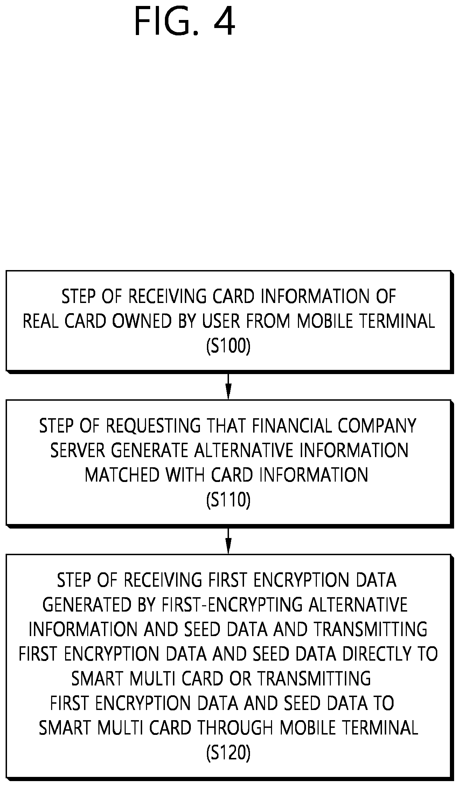

FIG. 4 is a flowchart of a method for issuing card data for a smart multi card according to an embodiment of the present invention when there is a real card.

The method for issuing card data for a smart multi card according to an embodiment of the present invention includes a step of receiving card information of a real card owned by a user from the mobile terminal 200 (S100), a step of requesting that the financial company server 400 generate alternative information matched with the card information (S110), and a step of receiving first encryption data generated by first-encrypting the alternative information and seed data and transmitting the first encryption data and the seed data directly to the smart multi card or transmitting the first encryption data and the seed data to the smart multi card through the mobile terminal 200 (S120). The method for issuing card data for a smart multi card according to an embodiment of the present invention will be described in sequence.

The card information management server 300 receives the card information of the real card owned by the user from the mobile terminal 200 (S100). The user may manually input information, such as a card number, a CVC number, a valid date, etc., to the mobile terminal 200 and transmit the card information of the real card to the card information management server 300, or may take a picture of the real card with the mobile terminal 200, cause the mobile terminal 200 to recognize the card information of the real card through optical character recognition (OCR), image recognition, or the like, and transmit the card information to the card information management server 300.

The card information management server 300 requests that the financial company server 400 generate the alternative information matched with the card information (S110). Since the real card already exists, the card information management server 300 may request that the financial company server 400 provide an alternative number corresponding to the card number of the real card.

The card information management server 300 receives the first encryption data generated by first-encrypting the alternative information and the seed data and transmits the first encryption data and the seed data directly to the smart multi card or transmits the first encryption data and the seed data to the smart multi card through the mobile terminal 200 (S120). In other words, the card information management server 300 may request that the financial company server 400 first-encrypt the alternative information and provide the first-encrypted data, and may request that the financial company server 400 provide seed data required to perform tokenization (i.e., second encryption) in the smart multi card. When the card information is transmitted by wireless communication, the card information may be intercepted during the transmission, and thus the card information management server 300 may receive the data (i.e., the first encryption data) obtained by completing the first encryption of the card information from the financial company server 400.

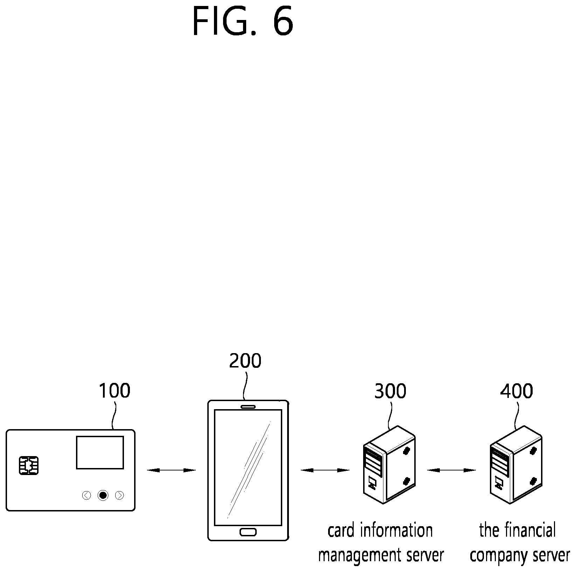

Subsequently, the card information management server 300 may transmit the first encryption data and the seed data together to the smart multi card. When the smart multi card can receive the card data (i.e., the first encryption data and the seed data) by wireless communication, the card information management server 300 may transmit the card data directly to the smart multi card. As shown in FIG. 6, when the smart multi card and the card information management server 300, which is an external server, cannot directly communicate with each other, the card information management server 300 may transmit the card data to the mobile terminal 200 by wireless communication, and the mobile terminal 200 may transmit the card data to the smart multi card by wireless communication such as NFC, BLE, and the like.

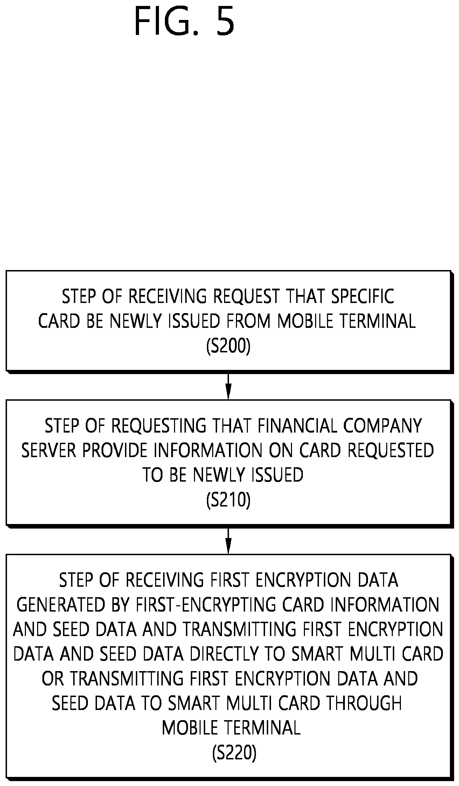

FIG. 5 is a flowchart of a method for issuing card data for a smart multi card according to an embodiment of the present invention when a new card is issued by the financial company server 400.

The method for issuing card data for a smart multi card according to another embodiment of the present invention includes a step of receiving a request that a specific card be newly issued from the mobile terminal 200 (S200), a step of requesting that the financial company server 400 provide information on the card requested to be newly issued (S210), and a step of receiving first encryption data generated by first-encrypting the card information and seed data and transmitting the first encryption data and the seed data directly to the smart multi card or transmitting the first encryption data and the seed data to the smart multi card through the mobile terminal 200 (S220). The method for issuing card data for a smart multi card according to an embodiment of the present invention will be described in sequence. A detailed description of a previously described step will be omitted below.

The card information management server 300 receives a request that a specific card be newly issued from the mobile terminal 200 (S200). A user may request that the specific new card be issued through an application installed on the mobile terminal 200.

The card information management server 300 requests that the financial company server 400 provide information on the card requested to be newly issued (S210). In other words, the card information management server 300 may request that the financial company server 400 issue the card requested by the user. At this time, the card information management server 300 may transmit identification information on the user who has requested that the card be issued as well as card identification information, such as a card company, a card name, and the like.

The card information management server 300 receives the first encryption data generated by first-encrypting the card information and the seed data and transmits the first encryption data and the seed data directly to the smart multi card or transmits the first encryption data and the seed data to the smart multi card through the mobile terminal 200 (S220). In other words, the card information management server 300 may request that the financial company server 400 first-encrypt the card information, such as a card number or the like, and provide the first-encrypted data, and may request that the financial company server 400 provide seed data required to perform tokenization (i.e., second encryption) in the smart multi card. When the card information is transmitted by wireless communication, the card information may be intercepted during the transmission, and thus the card information management server 300 may receive the data (i.e., the first encryption data) obtained by completing the first encryption of the card information from the financial company server 400.

Subsequently, the card information management server 300 may transmit the first encryption data and the seed data together to the smart multi card. When the smart multi card can receive the card data (i.e., the first encryption data and the seed data) by wireless communication, the card information management server 300 may transmit the card data directly to the smart multi card. As shown in FIG. 6, when the smart multi card and the card information management server 300, which is an external server, cannot directly communicate with each other, the card information management server 300 may transmit the card data to the mobile terminal 200 by wireless communication, and the mobile terminal 200 may transmit the card data to the smart multi card by wireless communication such as NFC, BLE, and the like.

According to the above-described present invention, it is possible to obtain the following effects.

First, a user can conveniently input a new card into a smart multi card.

Second, card information is encrypted and stored in an IC chip, and thus leakage thereof to the outside can be prevented.

Third, since first-encrypted card data (i.e., first encryption data) is transmitted and received by wireless communication, it is possible to prevent leakage of actual card data after the first-encrypted card data is intercepted.

Fourth, since token data generated through encryption is used for a payment, it is possible to prevent actual card data from being leaked when a payment is made.

Fifth, when a financial company server determines whether to approve a payment using time data, a transaction which takes longer than a specific time range is determined to be an abnormal transaction and may not be approved. In this way, a maximum time range for payment approval is adopted, and security can be further improved.

Embodiments of the present invention have been described above with reference to the accompanying drawings. Those skilled in the art should understand that various changes in form and details may be made therein without departing from the spirit and scope of the invention as defined by the appended claims. The above embodiments are accordingly to be regarded as illustrative rather than restrictive.

## Claims

1. A smart multi card comprising:
a first storage unit configured to store seed data and at least one piece of first encryption data generated by first-encrypting specific card information or alternative information corresponding to the card information;
a second storage unit configured to store card-related data including data regarding storage locations of a specific piece of the first encryption data and the seed data in the first storage;
a user input unit configured to receive a manipulation of a user for a selection among one or more cards;
a first control unit configured to generate token data by second-encrypting a piece of the first encryption data corresponding to the selected card with the seed data;
a second control unit configured to request that the first control unit provide the token data based on a piece of storage location data corresponding to the selected card; and
a card data output unit configured to output the token data to an outside,
wherein the card data output unit includes an integrated circuit (IC) chip, and
the first control unit and the first storage unit are included in the IC chip.

2. The smart multi card of claim 1, further comprising a wireless communication unit configured to receive a piece of the first encryption data corresponding to a specific card and the seed data by exchanging data with a mobile terminal by wireless communication, and
the second control unit requests that the first storage unit store the piece of the first encryption data and the seed data received through the wireless communication unit at a specific storage location in the first storage unit.

3. The smart multi card of claim 2, wherein the mobile terminal receives the piece of the first encryption data and the seed data from a card information management server by wireless communication and transfers the piece of the first encryption data and the seed data to the smart multi card.

4. The smart multi card of claim 2, wherein the wireless communication unit transmits first user authentication information, which is compared with second user authentication information stored in the mobile terminal, to the mobile terminal and receives the piece of the first encryption data and the seed data from the mobile terminal when the first user authentication information coincides with the second user authentication information.

5. The smart multi card of claim 1, wherein the card-related data includes card identification information,
further comprising a display unit configured to visually display a piece of card identification data of the selected card on a screen.

6. The smart multi card of claim 1, wherein the seed data varies according to users or financial companies, and
the token data is transferred from a payment terminal to a financial company server, is subjected to second decryption based on the seed data, and is then subjected to first decryption corresponding to the first encryption so that whether to approve a payment is determined.

7. The smart multi card of claim 1, wherein the second control unit combines the token data with time data corresponding to a time point at which the token data is received from the first control unit, and
the time data is used to determine whether a time point at which a financial company server determines whether to approve a payment is within a specific time range from the time point corresponding to the time data.

8. The smart multi card of claim 7, wherein the time data is generated according to a specific random number generation rule in the second control unit.

9. The smart multi card of claim 1, wherein the card data output unit further includes a magnetic field generation unit configured to include at least one magnetic cell and output the token data by generating a magnetic field, and
the user input unit receives a selection of an output method for the token data from the user.

10. A method in which a card information management server issues card data to be stored in a smart multi card, comprising:
receiving card information of a real card owned by a user from a mobile terminal;
requesting that a financial company server generate alternative information matched with the card information; and
receiving first encryption data generated by first-encrypting the alternative information and seed data and transmitting the first encryption data and the seed data directly to the smart multi card or transmitting the first encryption data and the seed data to the smart multi card through the mobile terminal.

11. A method in which a card information management server issues card data to be stored in a smart multi card, comprising:
receiving a request that a specific card be newly issued from a mobile terminal;
requesting that a financial company server provide information on the card requested to be newly issued; and
receiving first encryption data generated by first-encrypting the card information and seed data and transmitting the first encryption data and the seed data directly to the smart multi card or transmitting the first encryption data and the seed data to the smart multi card through the mobile terminal.
